# EUROPEAN PATENT SPECIFICATION

(11) **EP 2 954 251 B1**
(45) Date of publication and mention of the grant of the patent: **13.09.2017**
(21) Application number: 14704913.4
(22) Date of filing: 23.01.2014
(51) Int. Cl.: F21K 9/275, F21K 9/90, F21V 23/00, F21Y 103/10, F21Y 115/10

(54) **TUBE LAMP SUPPORT STRUCTURE**
TRÄGERSTRUKTUR FÜR RÖHRENLAMPE
STRUCTURE DE SUPPORT POUR LAMPE A TUBE

(30) Priority: 06.02.2013 US 201361761371 P
(43) Date of publication of application: 16.12.2015
(73) Proprietor: Philips Lighting Holding B.V., 5656 AE Eindhoven (NL)
(72) Inventor: DEN BOER, Reinier Imre Anton, NL-5656 AE Eindhoven (NL)
(74) Representative: van Eeuwijk, Alexander Henricus Waltherus
(86) International application number: PCT/IB2014/058478
(87) International publication number: WO 2014/122547

(56) References cited:
- EP-A1- 2 395 275
- EP-A2- 2 239 493
- WO-A1-2011/099288
- WO-A1-2013/014819

## Description

### FIELD OF THE INVENTION

The present invention generally relates to the field of retrofit tube lamps. In particular, the present invention relates to a support structure for arrangement in a lamp tube and a method of manufacturing such support structures.

### BACKGROUND OF THE INVENTION

The use of light-emitting diodes (LED) for illumination purposes continues to attract attention. Compared to incandescent lamps, fluorescent lamps, neon tube lamps, etc., LEDs provide numerous advantages such as a longer operational life, a reduced power consumption, and an increased efficiency related to the ratio between light energy and heat energy. The development of new and improved LEDs has caused an increased interest in replacing conventional light sources with LED-based lamps, also called retrofitting. It will be appreciated that LEDs may replace conventional light sources in virtually any kind of lighting, e.g. commercial or domestic lighting arrangements, advertising signs, traffic signals, exit signs, etc. The light source replacement (retrofitting) is often performed by removing the conventional light source(s) from a luminaire (e.g. a lamp holder) of the lighting arrangement and attaching the LEDs, LED arrangement(s), lamp(s) and/or device(s) into the luminaire.

Furthermore, different LED-based retrofit lamps have been designed to mimic the shape of conventional lamps. For example, retrofit tube lamps comprising LEDs have been disclosed, wherein these tube lamps are adapted to replace conventional fluorescent tube lamps. In US 8282247, a LED based light arrangement for use in a conventional fluorescent fixture is shown. LEDs are mounted on a circuit board which is mounted on an elongated heat sink shaped from a highly thermally conductive material. The heat sink can be slidably inserted into an elongated translucent tube and held in place by a friction fit.

In WO2011099288, a LED lamp shaped like a fluorescent tube lamp is provided. The lamp contains a rail member having a C-Shaped cross section and LED modules are slid into the rail. A spacer ensures that electrical connectors of the LED module are pushed into contact with corresponding connector portions within the rail member and are held with a friction fit.

However, the light arrangement shown is circumstantial and does not ensure the safety of the light arrangement in case of a breaking of the tube. Hence, alternative solutions are of interest for a facilitated and/or a more cost effective manufacture of light arrangements or devices, wherein these light arrangements furthermore provide a safe handling and operation.

### SUMMARY OF THE INVENTION

The present invention has been made with respect to the above considerations. It is an object of the present invention to provide a support structure and a method of manufacturing a support structure, thereby providing a facilitated manufacture of lighting devices such as retrofit tube lamps, allowing for a reduction of the production cost, and/or providing a safer operation and handling of the lighting devices.

This and other objects are achieved by providing a support structure and a method having the features defined in the independent claims. Preferred embodiments of the invention are defined in the dependent claims.

Hence, according to a first aspect of the invention, there is provided a support structure for arrangement in a lamp tube. The support structure comprises a body portion comprising at least one fastening means for fastening at least one lighting module. The body portion further comprises at least one compartment arranged to accommodate a driver unit for a supply of power to the at least one lighting module. The support structure further comprises at least one lid portion and the body portion and said at least one lid portion is formed in one piece for closure of the at least one compartment.

According to a second aspect of the present invention, there is provided a method of manufacturing a support structure for arrangement in a lamp tube. The method comprises the step of providing a plastic material in a fluid state and injecting the plastic material into a mould. The method further comprises the step of moulding the plastic material into a body portion and a lid portion, wherein the body portion and the lid portion is moulded into one piece and comprises at least one fastening means for fastening at least one lighting module, and at least one compartment arranged to accommodate a driver unit for a supply of power to the at least one lighting module

Thus, the present invention is based on the idea of providing a support structure comprising a body portion in one piece which is easily and cost-efficiently manufactured. The body portion is arranged to hold a lighting module and conveniently provides a compartment for a driver unit for supplying power to the lighting module. The support structure further comprises a lid portion for closure of the compartment, wherein the compartment and the lid portion ensures a safe enclosure of a driver unit arranged therein. The present invention hereby provides an efficient, convenient and cost-effective support structure for arrangement in a lamp tube, which support structure further provides a safe operation and/or handling of the lamp tube.

The present invention is advantageous in that the body portion of the support structure is formed in one piece, which implies a relatively low number of components of the support structure and which reduces the steps for handling, positioning and/or fixating these components. The present invention hereby provides the advantage of a relatively inexpensive and cost-effective manufacture of the support structure. Moreover, the relatively small number of components of the support structure implies an easier recycling, especially compared to devices/arrangements in the prior art comprising a relatively large number of components.

The present invention is further advantageous in that the at least one fastening means for fastening the at least one lighting module is comprised (integrated) in the one-piece body portion. Hence, additional/auxiliary fastening devices and/or means (e.g. clips, glue, etc.) are rendered unnecessary in the present invention, which hereby provides an even more convenient and easily manufactured support structure.

The present invention is further advantageous in that a compartment arranged to accommodate a driver unit is comprised in the one-piece body portion of the support structure. The need of providing and/or fastening an additional component (housing) to the support structure for holding power supply electronics is hereby avoided. Hence, the integrated compartment of the body portion contributes to an even more convenient and more cost-efficient manufacturing of the support structure.

By "driver unit" (or driver), it is here meant one or more power feed/control components and/or circuits, wherein the component(s) and/or circuit(s) are adapted to provide power for driving/operating a lighting module arranged on the support structure (and/or LEDs comprised in the lighting modules). It will be appreciated that the driver unit may be connectable to an external power source/supply.

The present invention is further advantageous in that the at least one lid portion of the support structure, arranged for closure of the at least one compartment, provides an increased safety for a driver unit arranged therein by at least partially enclosing the driver unit. If the support structure is arranged in a lamp tube and the lamp tube breaks, the compartment and/or the lid portion of the support structure provides an efficient and convenient protection of the driver unit within the lamp tube without the need of any additional components/parts. It will be appreciated that the protection of a driver unit arranged within a lamp tube is highly important, as electrical safety regulations may require that the lamp does not expose any electronic connections and/or components in the case a lamp tube breaks. In prior art arrangements, protection is often sought to be provided by the lamp tube itself, often leading to the use of expensive materials for durability/sturdiness such as extruded plastic materials. In the present invention, on the other hand, the protection of a driver unit (and of a lamp tube) is provided by the support structure. As a consequence, the support structure allows for the use of less expensive materials and/or devices for a lamp tube, such as the use of a regular lamp tube made of glass. Moreover, as the at least one lid portion need not cover the at least one lighting module, it does not have to be made of a transparent material. Consequently, the at least one lid portion may be made of a less expensive material than would a transparent or translucent cover. The at least one lid portion may be connectable (or connected) to the at least one compartment for openable closure of the at least one compartment, such that the lid portion and compartment is arranged to at least partially enclose a driver unit arranged in the compartment. In other words, the lid portion (and/or the compartment) may comprise a releasable connection, such that the lid portion may be arranged to close and reopen the compartment. This may allow a removal and/or replacement of a driver unit arranged in the compartment, e.g. due to malfunction. Alternatively, the lid portion may be connected or connectable to the compartment for permanent closure of the compartment.

The present invention is further advantageous in that the support structure provides an easy and convenient arrangement of one or more components on/in the support structure, and further provides an easy insertion into a lamp tube. For example, a lighting module may easily be fastened to the fastening means of the support structure by manual or automatic operation (e.g. by a "pick and place" automation). Analogously, the easily accessible compartment of the support structure provides a convenient arrangement of a driver unit into said compartment. The support structure, arranged to hold the lighting module and the driver unit, may thereafter be inserted into a lamp tube.

It will be appreciated that no additional end caps or the like are needed in the support structure of the present invention, as the functioning of such end caps is integrated in the one-piece body portion of the support structure. As a result, the present invention provides an even more convenient and cost-efficient support structure compared to prior art arrangements.

The body portion of the support structure comprises at least one fastening means for fastening at least one lighting module. By "fastening means", it is here meant substantially any means for fastening, fixation and/or attachment, such as one or more clamps, snap fits, locking mechanisms, or the like. Alternatively, or additionally, the at least fastening means may comprise adhesive tape or glue.

The body portion of the support structure further comprises at least one compartment arranged to accommodate a driver unit for a supply of power. By "compartment", it is here meant a cavity, cover, housing, seat, or the like, arranged to at least partially enclose and/or hold a driver unit arranged therein.

It will be appreciated that the body portion, comprising the at least one fastening means and the at least one compartment, is formed in one piece. Hence, it is here meant that the body portion consists of a single piece of material. The body portion may be formed by moulding/casting or by extraction techniques.

The support structure further comprises at least one lid portion connectable to the at least one compartment for closure of the compartment. By "lid portion", it is here meant a lid, cap, cover, or the like.

According to the present invention, the body portion and the at least one lid portion of the support structure is formed in one piece. The present embodiment is advantageous in that the one-piece body portion, including the lid portion, results in an even more easy, convenient and/or cost-efficient manufacture of the support structure. The present embodiment is further advantageous in that the integration of the lid portion in the one-piece body portion further reduces the number of separate components/pieces of the support structure, resulting in an even more convenient support structure in terms of handling and storage.

According to an embodiment of the present invention, the at least one lid portion may be articulately connected to the at least one compartment. The present embodiment is advantageous in that the articulated/hinged arrangement of the lid portion provides an intuitive and easily performed closure of the compartment.

According to an embodiment of the present invention, the body portion may have an elongated shape and may have a semicircular cross-section. If a lighting module is arranged on the flat portion of the semicircular body portion, the support structure hereby allows for a relatively large portion of the light from the lighting module to be emitted into the surroundings without being blocked by the body portion. Thereby, the body portion need not necessarily be made of a transparent or translucent material, which even further reduces the cost of the support structure. The shape and/or cross-section of the body portion may advantageously be adapted to fit an inner geometry of a cylindrical lamp tube in which the support structure may be arranged. The body portion may further be arranged to rest against this inner geometry when arranged in the lamp tube. The adapted fit of the body portion and/or arrangement of the body portion within the cylindrical lamp tube, as described, enables the use of a body portion of a relatively soft and/or non-stiff material. Consequently, the stiffness of a lamp tube may maintain the shape of the body portion (instead of the need of providing a self-supporting body portion) when the support structure is arranged within the lamp tube. Furthermore, if the body portion is arranged in a lamp tube, the semicircular body portion according to the embodiment of the present invention provides space for a lighting module mixing chamber between the body portion and the lamp tube.

According to the present invention, the body portion is manufactured from an injection moulded plastic material. The present embodiment is advantageous in that the manufacture of the body portion hereby becomes even more cost-efficient.

According to an embodiment of the present invention, the support structure may further comprise at least one heat distribution structure connectable to the body portion and arranged for a distribution of heat from the at least one lighting module. In other words, the heat distribution structure may be connected to the body portion such that the heat distribution structure, via the body portion, is in thermal contact with a lighting module arranged on the support structure. By this arrangement, the heat distribution structure is arranged to lead away heat from the lighting module, from light sources (e.g. LEDs) and/or other components arranged on the lighting module. The body portion and/or a lamp tube may provide stiffness (to a tube lamp) so as to reduce the need of stiffness provided by the at least one heat distribution structure. This allows for the use of a smaller/thinner heat distribution structure, thereby reducing manufacturing costs of the support structure even further. For example, the at least one heat distribution structure may be of metal, and may be a metal sheet. This provides a significant cost down compared to a thicker heat distribution structure with the purpose of providing stiffness to a tube lamp in addition to the distribution of heat away from one or more light sources. In the present embodiment, the at least one heat distribution structure may advantageously be arranged on top of a lighting module held by the body portion, so that the lighting module and the at least one heat distribution structure may form a heat conductive stack on (top of) the body portion.

According to an embodiment there is provided a support structure assembly comprising at least one body portion arranged for longitudinal interconnection. By "longitudinal interconnection", it is hereby meant that two or more body portions are interconnected, locked and/or fastened to each other in a longitudinal direction. Analogously to the first aspect of the present invention, the support structure assembly comprises at least one fastening means for fastening at least one lighting module, at least one compartment arranged to accommodate a driver unit for a supply of power to the at least one lighting module, and at least one lid portion connectable to the at least one compartment for closure of the at least one compartment.

It will be appreciated that the mentioned advantages of the support structure also hold for the support structure assembly. The support structure assembly is further advantageous in that two or more body portions of the support structure assembly may be conveniently interconnected. The interconnection of body portions is especially advantageous when arranging the support structure assembly in a lamp tube. Furthermore, a desired length of the support structure assembly may be formed, e.g. with the purpose to adapt said length to the length of a lamp tube into which the support structure assembly is to be arranged. The interconnection of the two or more body portions may be performed either manually or automatically. It will be appreciated that the two or more body portions may be interconnected by substantially any locking or fastening means, e.g. one or more snap connections.

According to an embodiment, at least a (main) portion of the support structure assembly when assembled may be arranged to fit within the inner dimension of a lamp tube for an insertion thereto. The support structure assembly may further comprise a first end portion of the support structure assembly, the first end portion having a larger diameter than the (main) portion and being arranged to abut a first end of the lamp tube upon insertion. The support structure assembly may further comprise an end element arranged at a second end portion of the support structure assembly opposite the first end portion, the end element being arranged to fixate the support structure assembly at a second end of the lamp tube upon insertion. It will be appreciated that the larger geometry of the first end portion compared to the (main) portion allows for a fixation of the support structure assembly at that end, and a closure/sealing of the lamp tube at that end, without the need of additional parts such as a separate end cap. The end element may for example be a geometry of the support structure assembly which is adapted to expand when being moved out through a second end of the lamp tube, opposite the first end of the lamp tube. Such an expanding geometry may even further reduce the number of parts of the support structure assembly. Alternatively, the end element may be an element for insertion in the second end of the lamp tube, e. g. an end plug. It is to be noted that a similar embodiment is envisaged also for the first aspect of the present invention, i.e. a support structure is envisaged further comprising a first end portion and an end element as described above.

According to an embodiment, the support structure assembly may further comprise at least one heat distribution structure (e.g. a metal sheet) connectable to at least one of the at least one body portion and arranged for a distribution of heat from at least one lighting module held by the support structure. The advantages of this embodiment are analogous to those described in relation to the corresponding embodiment of the first aspect of the present invention.

According to an embodiment, one or more body portions of a first group may comprise a material different from the material of one or more body portions of a second group, different from the first group. In other words, different materials may be used in different body portions, depending on the required properties of the particular portions. The present embodiment is advantageous in that materials with required/sought material properties (e.g. electrical insulation, transparency and/or stiffness) may be used in certain body portions, whereas other (and further relatively inexpensive) materials may be used in body portions for which specific material properties are of less importance. For example, body portions arranged to be provided at least partially outside a lamp tube may comprise an electrically insulating material, while body portions comprising at least one compartment for accommodating a driver unit may comprise a sturdier and/or a more durable material for an increased protection of a driver unit arranged therein.

According to an embodiment, there is provided a lighting device comprising a lamp tube, at least one lighting module, and a driver unit for a supply of power to the at least one lighting module. The lighting device further comprises a support structure according to the first aspect of the present invention or a support structure assembly. The support structure or support structure assembly is arranged to support the at least one lighting module and to accommodate the driver unit. Further, the support structure or support structure assembly is arranged in the lamp tube. It will be appreciated that the lighting device of the present embodiment may be substantially any kind of lighting device comprising a lamp tube, such as a tube lamp. Furthermore, by "lighting module", it is here meant a printed circuit board (PCB), a substrate, or the like, arranged for mechanical and/or electrical support of one or more electrical components, e.g. LEDs. It will be appreciated that the advantages described in relation to the first two aspects of the present invention apply analogously to the lighting device according to the embodiment of the present invention. For an even higher degree of protection of the lighting device, the at least one lighting module of the support structure may further comprise a protective lamination, coating and/or covering in such a way that electronic connections therein are protected in case the lamp tube breaks.

According to an embodiment of the present invention, the lamp tube of the lighting device may be a glass lamp tube. The present embodiment is advantageous in that the glass material provides a stiffness to the lamp tube (and to the support structure or support structure assembly arranged therein). Furthermore, the use of the relatively inexpensive glass material even further reduces the manufacturing cost of the lighting device.

According to an embodiment of the second aspect of the present invention, the method may comprise the steps of providing a heat-conductive sheet material, arranging the heat-conductive sheet material in a mould, providing a plastic material in a fluid state and injecting the plastic material into the mould, moulding the plastic material into the body portion, wherein the sheet material is bonded to the plastic material, and wherein the plastic material and the sheet material are thermally connected to each other. By the term "fluid state", it is here meant a state of the plastic material which is able to conform to the form of the mould, e.g. a melt. The present embodiment is advantageous in that it provides an efficient and cost-effective method of manufacturing a support structure comprising a heat distribution structure in form of a heat-conductive sheet material. The heat distribution structure is arranged to efficiently dissipate heat generated by one or more heat-generating elements (e.g. lighting module(s) and/or LEDs) held by the support structure. Another advantage of the method of the present invention is that less heat distribution material is needed compared to methods and processes used the prior art, e.g. compared to insert moulding processes. Hence, the method of the present invention may even further reduce the manufacturing cost of the support structure. Furthermore, the heat distribution structure is not required to provide any stiffness for the support structure resulting from the method of the present invention. If the support structure is arranged in a (glass) lamp tube, the lamp tube itself is able to provide the required stiffness. Hence, a relatively thin sheet material may be used as a heat distribution structure, which even further reduces the manufacturing cost of the support structure.

It will be appreciated that any of the features in the embodiments described above for a support structure according to the first aspect of the present invention or support structure assembly may be combined with other embodiments of the support structure and the support structure assembly, respectively. Similarly, it will be appreciated that any of the features in the embodiments described above for a method according to the second aspect of the present invention may be combined with other embodiments of the method and/or with embodiments of the support structure or the support structure assembly.

Further objectives of, features of, and advantages with, the present invention will become apparent when studying the following detailed disclosure, the drawings and the appended claims. Those skilled in the art will realize that different features of the present invention can be combined to create embodiments other than those described in the following.

### BRIEF DESCRIPTION OF THE DRAWINGS

This and other aspects of the present invention will now be described in more detail, with reference to the appended drawings showing embodiments of the invention. The embodiments not covered by claim 1 or claim 9 do not form part of the invention.
Fig. 1 is a schematic perspective view of a support structure according to an embodiment of the present invention,
Figs. 2-5 schematically show a lighting device, as well as its assembly, according to an embodiment of the present invention, wherein the lighting device comprises the support structure shown in Fig. 1,
Figs. 6-7 schematically show a cross section along the line L1-L1 of the lighting device shown in Fig. 5, and a corresponding cross section of a lighting device according to an alternative embodiment of the present invention,
Figs. 8-9 schematically show a cross section along the line L2-L2 of the support structure shown in Fig. 1, and a corresponding cross section of a support structure according to an alternative embodiment of the present invention,
Figs. 10a-e are side views of different embodiments of support structure assemblies according to the present invention, and
Fig. 11 shows a general outline of a method of manufacturing a support structure according to an embodiment of the present invention.

All the figures are schematic, not necessarily to scale, and generally only show parts which are necessary in order to elucidate the invention, wherein other parts may be omitted or merely suggested.

### DETAILED DESCRIPTION

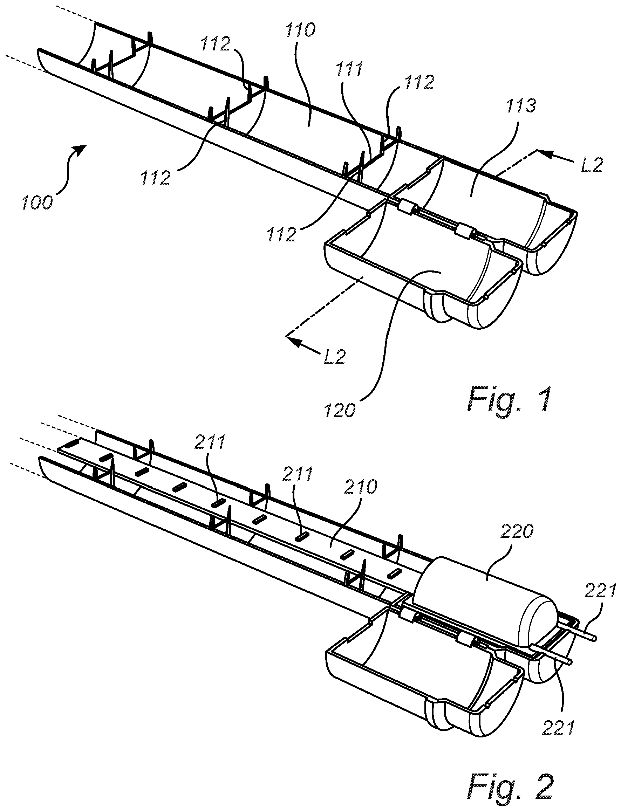

Fig. 1 is a schematic perspective view of a support structure 100 for arrangement in a lamp tube. The support structure 100 comprises a body portion 110 having an elongated shape and a semicircular cross section for fitting in a lamp tube having a cylinder shape. Embodiments of support structures with body portions of other shapes are also envisaged. For example, in a support structure for insertion into a lamp tube with a different shape (e.g. having a non-circular cross section), the body portion may have a shape adapted to fit in such a lamp tube. In the embodiment depicted in Fig. 1, the body portion 110 comprises at least one fastening means 111, 112 for fastening at least one lighting module, wherein the fastening means 111, 112 is exemplified as a snap fit geometry comprising recess 111 and pins 112 for fastening at least one lighting module in the form of one or more printed circuit boards (PCB). In some embodiments, the recesses 111 and/or pins 112 may be adapted to fasten also a heat distribution structure. Alternatively, the body portion 110 may comprise additional fastening means for fastening the heat distribution structure. The body portion 110 further comprises a compartment 113 arranged to accommodate a driver unit for a supply of power to the lighting module(s) held by the body portion 110. The body portion 110 is formed in one piece, i.e. it consists of a single piece of material. The body portion 110 may e.g. be formed by moulding/casting or by extraction techniques, and may for example be made of a plastic material such as polycarbonate, polybutylene terephthalate (PBT), polypropylene (PP) or high-density polyethylene (HDPE).

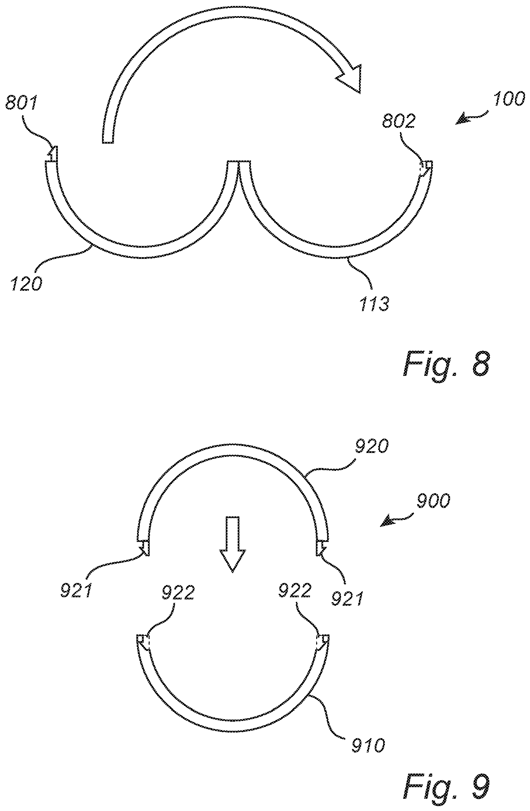

The support structure 100 further comprises a lid portion 120 for closure of the compartment 113. The lid portion 120 and the body portion 110 may be formed in one piece such that the lid portion 120 is connected to the body portion 110 as shown. Here, the lid portion 120 is articulately connected (hinged) to the body portion 110 for closure of the compartment 113. The articulate connection between the lid portion 120 and the body portion 110 may e.g. constitute a relatively thin portion of material, so as to allow an easy and convenient closure of the lid portion 120. Alternatively, the lid portion 120 may be provided separately from the body portion 110, which will be described in relation to Fig. 9. The lid portion 120 in Fig. 1 has a semicircular cross-section for fitting in a lamp tube having a cylinder shape after being closed over the compartment 113. It will be appreciated that the lid portion/portions 120 may take on substantially any other shape for a convenient fit to support structures of other shapes. For example, the lid portion 120 may be substantially flat.

Figs. 2-5 schematically show the assembly of a lighting device, as well as the lighting device itself, according to an embodiment of the present invention. The lighting device, here in the form of a retrofit tube lamp 200, comprises the support structure 100 shown in Fig. 1.

In Fig. 2 there is provided a lighting module 210 in the form of a PCB. One or more light emitting diodes (LED) 211 are mounted on the PCB 210 for providing a light output of the tube lamp 200. As shown in Fig. 2, the PCB 210 is fastened to the support structure 100 shown in Fig. 1 via fastening means, exemplified as recesses 111 and pins 112 of the body portion 110. A driver unit 220 is arranged in the compartment 113 and is connected to the PCB 210 so as to supply power to the PCB 210 and the LEDs 211. The driver unit 220 comprises power connection pins 221 for connecting the tube lamp 200 to a power supply. The PCB 210 may for example be fastened to the support structure 100 by manual or automatic operation (e.g. by a "pick and place" automation). In some embodiments, multiple PCBs may be interconnected via connections arranged in the body portion 110. For example, such connections may be arranged via insert moulding, e.g. as an additional step in an injection moulding process for manufacturing the body portion 110.

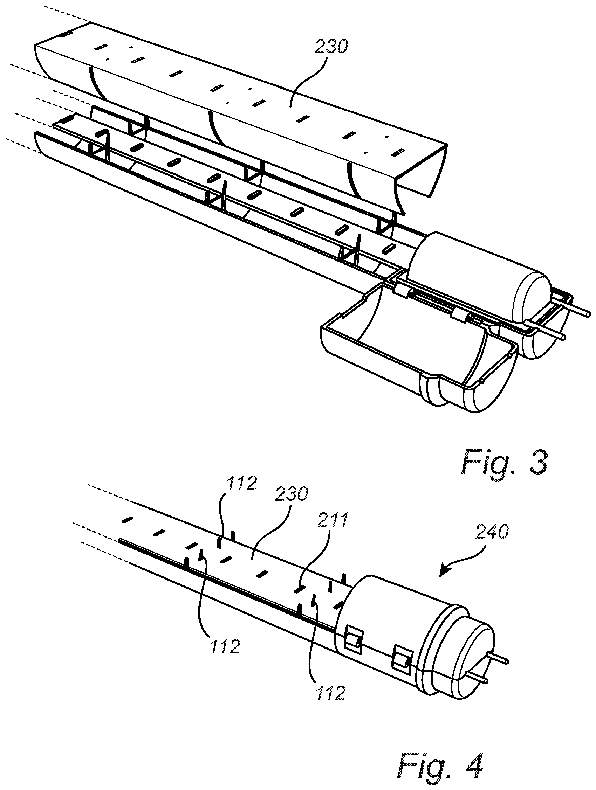

Figs. 3-4 show a heat distribution structure 230 fastened to the support structure 100 via the pins 112 of the body portion 110. The heat distribution structure 230 may be arranged on top of the PCB 210 such that the PCB 210 and the heat distribution structure 230 form a heat conductive stack on top of the body portion 110. The heat distribution structure 230 may advantageously be shaped to leave the LEDs 211 uncovered. The heat distribution structure 230 may be made of a heat conductive material such as metal (e.g. aluminum). For example, the heat distribution structure 230 may be a metal sheet or foil. In an alternative embodiment, the heat distribution structure 230 may be fastened to the support structure 100 before the PCB 210 is fastened, i.e. the heat distribution structure 230 may be arranged between the body portion 110 and the PCB 210.

In Fig. 4, the lid portion 120 has been closed over the compartment 113. The compartment 113 and the lid portion 120 hereby form a protective enclosure 240 around the driver unit 220, whereas the LEDs 211 remain uncovered. The enclosure 240 provided by the compartment 113 and the lid portion 120 increases the safety of the electrical connections and/or components of the driver unit 220. In case the support structure 100 is arranged in a lamp tube, and the lamp tube breaks, the compartment 113 and the lid portion 120 efficiently protect the driver unit 220 arranged in the support structure 100. Moreover, the enclosure 240 provided by the compartment 113 and the lid portion 120 provides fixation of the driver unit 220, thereby reducing the need of additional fastening means for the driver unit 220 such as screws and/or clamps. The PCB 210 may optionally comprise a protective lamination, coating and/or covering in such a way that electronic connections therein are protected in case a lamp tube, in which the PCB 210 is arranged, breaks.

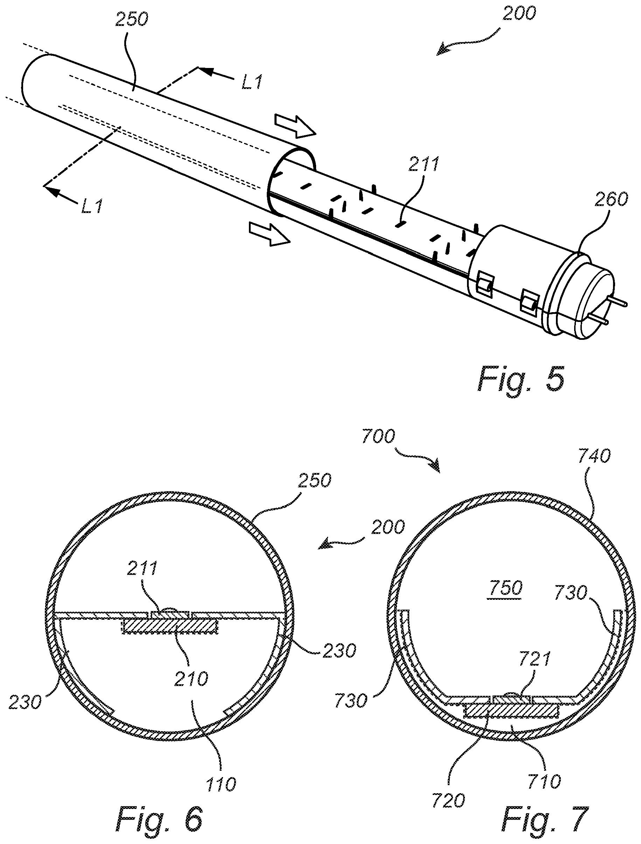

The support structure 100, together with the PCB(s) 210, the driver unit 220 and the heat distribution structure 230, may then be inserted into a lamp tube 250 for forming the tube lamp 200, as shown in Fig. 5. The support structure 100 allows for a simple top down assembly of the PCB 210 (e.g. via a snap fit geometry, eliminating the need for additional fastening means such as adhesives and/or screws), the driver unit 220 and the heat distribution structure 230 before insertion into the lamp tube 250, thereby facilitating the assembly of the tube lamp 200. The support structure 100 also reduces the number of loose (and potentially vulnerable/fragile) parts to be inserted into the lamp tube 250 and thereby further facilitates the assembly of the tube lamp 200.

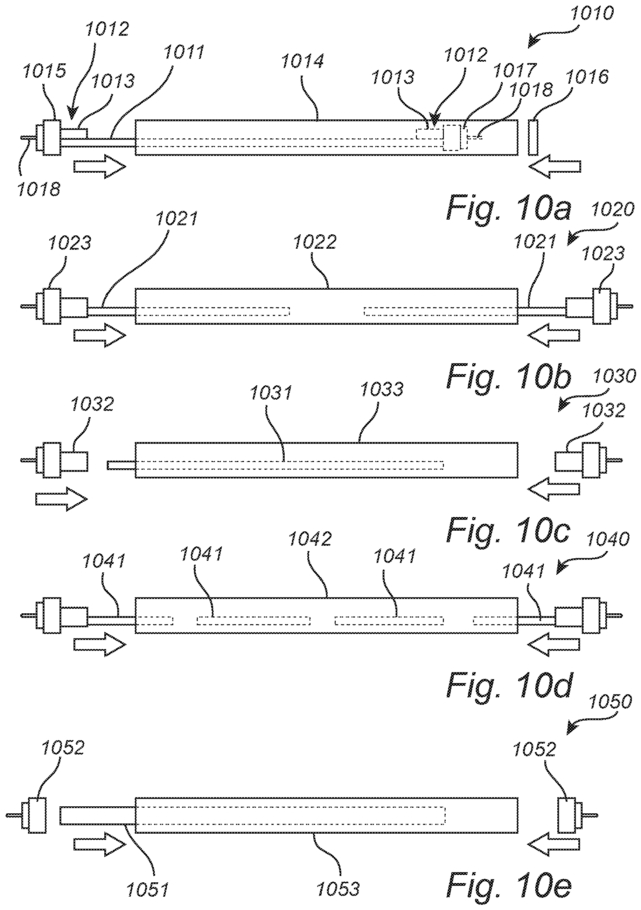

In the present embodiment, the body portion 110 comprises an end portion 260 having a larger diameter than the lamp tube 250. The end portion 260 is arranged to abut a first end of the lamp tube 250 upon insertion of the support structure 100 in the lamp tube 250. The end portion 260 may be used to seal this first end of the lamp tube 250 and to ascertain that this first end does not slip off the support structure 100. Different ways of sealing and/or fixating the opposite end of the lamp tube 250 will be described in relation to Fig. 10. In Fig. 5, the lamp tube 250 may e.g. be made of glass or of a transparent/translucent plastic material. The protective enclosure 240 allows for the use of a lamp tube 250 of glass, as the enclosure 240 is arranged to protect the driver unit 220 in case the glass breaks. This is advantageous, as a regular glass lamp tube 250 is less expensive than e.g. extruded plastic materials as commonly used in retrofit lamp tubes. Moreover, the stiffness of a glass lamp tube 250 allows for the use of a less stiff support structure 100. In particular, the support structure 100 and the glass lamp tube 250 may together provide enough stiffness for allowing the heat distribution structure 230 to be a relatively thin metal sheet instead of a thicker metal construction adapted to provide stiffness.

In some embodiments, the tube lamp 200 may comprise one or more diffusive sheets or coatings for a scattering of the light emitted by the LEDs. Additionally or alternatively, the tube lamp 200 may comprise sheets or coatings of remote phosphor for transforming the wavelength of the light emitted by the LEDs. In an exemplifying embodiment, the tube lamp 200 comprises a lid of similar shape as the lid portion 120 (i.e. with a semicircular cross section for fitting the inside of the lamp tube 250), but adapted to cover the LEDs 211. This lid may be adapted to scatter light and/or to transform wavelengths of the light, and may for example be snapped onto the support structure 100 after fastening of the LEDs 211 and the heat distribution structure 230.

Fig. 6 schematically shows a cross section along the line L1-L1 of the lighting device 200 depicted in Fig. 5. It will be appreciated that the outline of the support structure 100 is indicated in Fig. 6 by dashed lines. Furthermore, Fig. 7 schematically shows a corresponding cross section of a lighting device 700 according to an alternative embodiment of the present invention. Similarly to the lighting device 200, the lighting device 700 comprises a support structure 710 (indicated by dashed lines), at least one PCB 720 with LEDs 721, a driver unit (not shown) and a heat distribution structure 730. In contrast to the lighting device 200, wherein the LEDs 211 and the heat distribution structure 230 are arranged relatively close to the center of the lamp tube 250, i.e. relatively far from the circumference of the circular cross section of the lamp tube 250, the LEDs 721 are instead arranged relatively close to the bottom of the lamp tube 740. The arrangement of the LEDs 721 relatively close to the bottom of the lamp tube 740 increases the size of the mixing chamber 750 between the LEDs 721 and the lamp tube 740, which may improve uniformity of the light output of the lighting device 700. The heat distribution structure 730 may advantageously comprise a reflective surface for reflecting light received from the LEDs 721, thereby decreasing energy losses in the lighting device 700. Optionally, the heat distribution structure 730 may extend upward along the support structure 710 for a reflection of light emitted towards the sides of the lamp tube 740 back into the mixing chamber 750. The heat distribution structures 230 and 730 shown in Figs. 6-7 may advantageously be shaped to fit close along the respective glass tube 250, 740 so as to improve the heat transfer between the heat distribution structures 230 and 730 and the respective glass tube 250, 740.

Fig. 8 schematically shows a cross section along the line L2-L2 of the support structure 100 shown in Fig. 1, while Fig. 9 schematically shows a corresponding cross section of a support structure 900 according to an alternative embodiment of the present invention. The support structure 100 (or a body portion 110 of the support structure 100) comprises a compartment 113 closable by a lid portion 120 articulately connected to the compartment 113. The compartment may for example be openable after closure for removal/replacement of a driver unit arranged therein. Alternatively, the compartment 113 and/or lid portion 120 may comprise substantially any kind of locking means (such as a pin 801 extending from the lid portion 120 and snapping into place in a recess 802 of the compartment 113 once the compartment 113 is closed), e.g. for permanently closing the compartment 113. It will be appreciated that a permanent closure of the compartment 113 may further increase the safety of a driver unit housed therein, and/or may facilitate the manufacture of the support structure 100. The support structure 900 similarly comprises a compartment 910 and a lid portion 920 for closure of the compartment 910. However, the lid portion 920 is provided separately from the compartment 910. To close the compartment 910, the lid portion 920 may be slid or snapped into place on top of the compartment 910 (or body portion). Once the compartment 910 is closed, the lid portion 920 may for example be held in place by a snap fit geometry such as pins 921 extending from the lid portion 920 and snapping into place in recesses 922 of the compartment 910. An alternative or complement to the use of pins 921 and recesses 922 is to use ultrasonic welding to hold the lid portion 920 in place after closure of the compartment 910. Instead of closing the compartment 910 by moving the lid portion 920 vertically down on top of the compartment 910, the lid portion 920 may alternatively be slid into place horizontally along an axial direction of the support structure 900. For example, slits having cross sections similar to those of the recesses 922 may be used to guide the lid portion 920 during such a horizontal sliding motion.

In Fig. 10, different embodiments of support structure assemblies according to the present invention are shown.

Fig. 10a schematically shows an example of a support structure assembly 1010 similar to the support structure 100 depicted in Fig. 1. The support structure assembly 1010 comprises a single (one-piece) body portion 1011 which comprises at least one fastening means (not shown) for fastening at least one lighting module (e.g. one or more PCBs). The body portion 1011 further comprises two compartments 1012 located at the respective ends of the body portion 1011, wherein the respective compartment 1012 is arranged to accommodate a driver unit for a supply of power to the lighting module. The support structure assembly 1010 further comprises two lid portions 1013 each connectable to the respective compartments 1012 for a closure thereof. Analogously with the support structure 100 depicted in Fig. 1, the body portion 1011 is arranged to fit within the inner dimension of a lamp tube 1014. The body portion 1011 comprises a first end portion 1015 (here in the form of a ring-formed geometry) having a larger diameter than the lamp tube 1014 and which is arranged to abut a first end of the lamp tube 1014 when the support structure assembly 1010 is inserted into the lamp tube 1014. The first end portion 1015 serves to seal the lamp tube 1014 at this first end. The support structure assembly 1010 further comprises an end element 1016 arranged at a second end portion 1017 of the body portion 1011 opposite the first end portion 1015. The end element 1016 is arranged to fixate the support structure assembly 1010 at the second end of the lamp tube 1014 upon insertion. The end element 1016 may be substantially any kind of element for sealing the end of the lamp tube 1014, e.g. a plug. It will be appreciated that the support structure assembly 1011 may be arranged to integrate power connection pins 1018 of the driver units arranged in the compartments 1012. This provides the advantage that a power connection of this kind need not be included in separate end caps or in the end element 1016.

In exemplifying embodiments, the body portion 1011 may comprise an integrated functionality to fixate itself also at the second end of the lamp tube 1014, i.e. to prevent the lamp tube 1014 from slipping off the body portion 1011. The body portion 1011 may comprise an element or geometry with the purpose of increasing the dimension of the body portion 1011 locally at the second end of the lamp tube 1014 once the body portion 1011 has been inserted through the first end of the lamp tube 1014. For example, the body portion 1011 may comprise one or more elements and/or geometries arranged to move radially outward (e.g. a snap finger arrangement) for a fixation of the body portion 1011 at the second end of the lamp tube 1014 when the body portion 1011 exits the lamp tube 1014. In addition to an integrated fixating functionality, the support structure assembly 1010 may optionally comprise an additional end element adapted to be attached at the second end portion 1017 or to the second end of the glass tube 1014. Such an additional end element may have an outer shape mimicking that of the end of a traditional tube lamp, so as to allow a mounting of a lighting device (or a tube lamp) comprising the support structure assembly 1010 and the lamp tube 1014 in electric fittings adapted for conventional tube lamps.

Fig. 10b schematically shows a support structure assembly 1020 comprising two body portions 1021 each being similar to the body portion 110 depicted in Fig. 1. The body portions 1021 comprise fastening means for fastening PCBs and a housing for accommodating a driver unit. In the present example, the support structure assembly 1020 is adapted to be assembled by inserting one of the body portions 1021 from each end of a lamp tube 1022 and interconnecting the body portions 1021 longitudinally in the lamp tube 1022. The body portions 1021 may be equipped with substantially any locking or fastening means (e.g. a snap fit geometry) allowing for a simple (manual or automated) interconnection between the body portions 1021 in the lamp tube 1022. Each body portion 1021 may advantageously be formed in one piece, e.g. by injection moulding. In Fig. 10b, each of the body portions 1021 may have an end portion 1023 with a larger diameter than the lamp tube 1022 so as to allow fixation of the support structure assembly 1020 in the lamp tube 1022 without the need of additional parts, such as end plugs.

Fig. 10c schematically shows a support structure assembly 1030 comprising a body portion 1031 (comprising fastening means) for fastening PCBs. The support structure assembly 1030 further comprises one additional body portion 1032 at each end of the support structure assembly 1030, wherein each of the additional body portions 1032 comprises a compartment for accommodating a driver unit. The body portions 1031, 1032 are arranged to be inserted and interconnected in a lamp tube 1033 similarly to the assembly described in relation to Fig. 10b. By using different body portions to house the PCBs and the driver units, the material used in the body portions may be tailored for the intended use of the particular body portion. For example, the body portions 1032 for housing the driver units may advantageously comprise a relatively sturdy/durable and/or electrically insulating material (e.g. polycarbonate or polybutylene terephthalate materials), so as to protect the driver units, while the body portion 1031 for housing the PCBs may advantageously be made of a less expensive material (e.g. polypropylene or high-density polyethylene).

Fig. 10d schematically shows a support structure assembly 1040 comprising a plurality of body portions 1041 arranged for longitudinal interconnection in a lamp tube 1042. The interconnection may comprise substantially any interconnection elements, e.g. snap fits, and the interconnection may be performed manually or by automatic operation. The number and length of the body portions 1041 may be adapted based on the length of the lamp tube 1042 to be used. Especially for relatively long lamp tubes, e.g. at least 1, 1.25 or 1.5 m long, the choice between using a smaller or a larger number of body portions may be a trade-off between assembly costs associated with interconnecting the body portions and manufacturing costs of fewer but longer body portions.

Fig. 10e schematically shows a support structure assembly 1050 comprising a single body portion 1051 and end elements 1052 for fixating the body portion 1051 in a lamp tube 1053, and for sealing the lamp tube 1053.

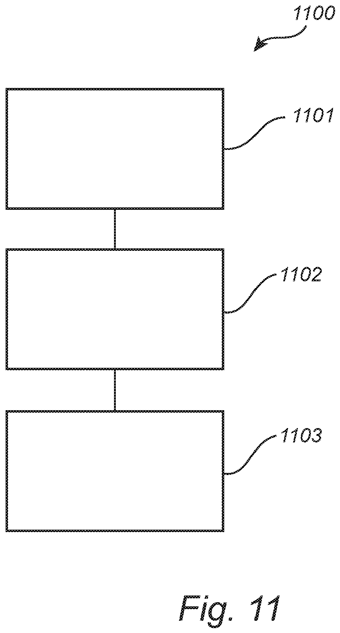

Fig. 11 shows a general outline of a method 1100 of manufacturing a support structure for arrangement in a lamp tube, according to an embodiment of the present invention. The support structure manufactured via the method 1100 in Fig. 11 may for example be the support structure 100 shown in Fig. 1. The method 1100 comprises the steps of providing 1101a plastic material in a fluid state and injecting 1102 the plastic material into a mould. The method 1100 further comprises the step of moulding 1103 the plastic material into a body portion, wherein the body portion is moulded into one piece and comprises at least one fastening means for fastening at least one lighting module, at least one compartment arranged to accommodate a driver unit for a supply of power to the at least one lighting module, and at least one connecting means for connection of at least one lid portion to the at least one compartment. The method 1100 may further comprise the steps of providing a heat-conductive sheet material and arranging the heat-conductive sheet material in a mould. The heat-conductive sheet material may advantageously be arranged in the mould prior to injecting the plastic material into the mould. In the present example, the step of moulding 1103 the plastic material into the body portion, is performed in such a way that the sheet material is bonded to the plastic material, and such that the plastic material and the sheet material are thermally connected to each other.

While embodiments of the invention have been illustrated and described in detail in the drawings and foregoing description, such illustration and description are to be considered illustrative or exemplary and not restrictive; the invention is not limited to the disclosed embodiments. For example, it is possible to operate the invention in an embodiment wherein the at least one compartment for accommodating a driver unit is located below a position in which the at least one fastening means is arranged to fasten the at least one lighting module. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage. Any reference signs in the claims should not be construed as limiting the scope.

## Claims

1. A support structure (100) for arrangement in a lamp tube, the support structure comprising:
a body portion (110), comprising at least one fastening means (111, 112) for fastening at least one lighting module, and
at least one compartment (113) arranged to accommodate a driver unit for a supply of power to the at least one lighting module,
at least one lid portion (120), **characterized in that** said body portion and said at least one lid portion is formed in one piece for closure of said at least one compartment.

2. The support structure as claimed in claim 1, wherein said at least one lid portion is articulately connected to said at least one compartment.

3. The support structure as claimed in claim 1, wherein said body portion has an elongated shape and has a semicircular cross-section.

4. The support structure as claimed in claim 1, wherein said body portion is manufactured from an injection moulded plastic material.

5. The support structure as claimed in claim 1, further comprising at least one heat distribution structure (230) connectable to said body portion and arranged for a distribution of heat from the at least one lighting module.

6. The support structure as claimed in claim 5, wherein said heat distribution structure is a metal sheet.

7. A lighting device (200), comprising:
a lamp tube (250),
at least one lighting module (210),
a driver unit (220) for a supply of power to said at least one lighting module, and
a support structure as claimed in claim 1, arranged to support said at least one lighting module and to accommodate said driver unit, and wherein said support structure is arranged in said lamp tube.

8. The lighting device as claimed in claim 7 wherein said lamp tube is a glass lamp tube.

9. A method (1100) of manufacturing a support structure for arrangement in a lamp tube, comprising the steps of:
providing (1101) a plastic material in a fluid state and injecting (1102) said plastic material into a mould;
moulding (1103) said plastic material into a body portion and a lid portion, wherein said body portion and said lid portion is moulded into one piece and comprises at least one fastening means for fastening at least one lighting module, and at least one compartment arranged to accommodate a driver unit for a supply of power to the at least one lighting module,
and at least one connecting means for connection of at least one lid portion to said at least one compartment.

10. The method as claimed in claim 9, comprising the steps of:
providing a heat-conductive sheet material;
arranging said heat-conductive sheet material in a mould;
providing a plastic material in a fluid state and injecting said plastic material into the mould;
moulding said plastic material into said body portion, wherein said sheet material is bonded to said plastic material, and wherein said plastic material and said sheet material are thermally connected to each other.

## Patentansprüche

1. Eine Stützstruktur (100) zur Anordnung in einem Lampenrohr, wobei die Stützstruktur folgendes aufweist:
einen Körperabschnitt (110), umfassend
mindestens ein Befestigungsmittel (111, 112) zur Befestigung mindestens eines Beleuchtungsmoduls und
mindestens ein Fach (113), das angeordnet ist, um eine Treibereinheit für eine Energieversorgung des mindestens einen Beleuchtungsmoduls aufzunehmen,
mindestens einen Deckelabschnitt (120),
**dadurch gekennzeichnet, dass**
der Körperabschnitt und der mindestens eine Deckelabschnitt einstückig zum Verschließen des mindestens einen Abteils ausgebildet ist.

2. Die Stützstruktur nach Anspruch 1, wobei der mindestens eine Deckelabschnitt gelenkig mit dem mindestens einen Abteil verbunden ist.

3. Die Stützstruktur nach Anspruch 1, wobei der Körperabschnitt eine langgestreckte Form und einen halbkreisförmigen Querschnitt aufweist.

4. Die Stützstruktur nach Anspruch 1, wobei der Körperabschnitt aus einem spritzgegossenen Kunststoffmaterial hergestellt ist.

5. Die Stützstruktur nach Anspruch 1, **dadurch gekennzeichnet, dass** sie mindestens eine mit dem Körperteil verbindbare Wärmeverteilungsstruktur (230) aufweist, die für eine Wärmeverteilung von dem mindestens einen Beleuchtungsmodul angeordnet ist.

6. Die Stützstruktur nach Anspruch 5, wobei die Wärmeverteilungsstruktur ein Metallblech ist.

7. Eine Beleuchtungseinrichtung (200), umfassend:
eine Lampenröhre (250)
mindestens ein Beleuchtungsmodul (210),
eine Treibereinheit (220) für eine Energieversorgung des mindestens einen Beleuchtungsmoduls, und
eine Stützstruktur nach Anspruch 1, die angeordnet ist, um das mindestens eine Beleuchtungsmodul zu tragen und die Treibereinheit unterzubringen, und wobei die Stützstruktur in dem Lampenrohr angeordnet ist.

8. Die Beleuchtungsvorrichtung nach Anspruch 7, wobei das Lampenrohr ein Glaslampenrohr ist.

9. Ein Verfahren (1100) zur Herstellung einer Stützstruktur zur Anordnung in einem Lampenrohr, mit den folgenden Schritten:
Bereitstellen (1101) eines Kunststoffmaterials in einem Fluidzustand und Einspritzen (1102) des Kunststoffmaterials in die Form:
Formen (1103) des Kunststoffmaterials in einen Körperabschnitt und einen Deckelabschnitt, wobei der Körperabschnitt und der Deckelabschnitt einstückig geformt ist und mindestens ein Befestigungsmittel zum Befestigen mindestens eines Beleuchtungsmoduls und mindestens ein Fach aufweisen, das angeordnet ist um eine Treibereinheit für eine Energieversorgung des mindestens einen Beleuchtungsmoduls aufzunehmen,
und mindestens ein Verbindungsmittel zum Verbinden von mindestens einem Deckelabschnitt mit dem mindestens einen Fach.

10. Das Verfahren nach Anspruch 9, die folgenden Schritte umfassend:
Bereitstellen eines wärmeleitenden Blattmaterials;
Anordnen des wärmeleitenden Blattmaterials in einer Form;
Bereitstellen eines Kunststoffmaterials in einem Fluidzustand und Einspritzen des Kunststoffmaterials in die Form;
Formen des Kunststoffmaterials in dem Körperabschnitt, wobei das Blattmaterial mit dem Kunststoffmaterial verbunden wird und wobei das Kunststoffmaterial und das Blattmaterial miteinander thermisch verbunden werden.

## Revendications

1. Structure de support (100) pour l'agencement dans un tube de lampe, la structure de support comprenant :
une partie de corps (110) comprenant :
au moins un moyen de fixation (111, 112) pour la fixation d'au moins un module d'éclairage et
au moins un compartiment (113) agencé pour loger une unité de pilote pour une alimentation de puissance à l'au moins un module d'éclairage,
au moins une partie de couvercle (120),
**caractérisée en ce que**
ladite partie de corps et ladite au moins une partie de couvercle sont formées dans une pièce pour la fermeture dudit au moins un compartiment.

2. Structure de support selon la revendication 1, dans laquelle ladite au moins une partie de couvercle est reliée par articulation audit au moins un compartiment.

3. Structure de support selon la revendication 1, dans laquelle ladite partie de corps présente une forme allongée et présente une section transversale semi-circulaire.

4. Structure de support selon la revendication 1, dans laquelle ladite partie de corps est fabriquée en un matériau plastique moulé par injection.

5. Structure de support selon la revendication 1, comprenant en outre au moins une structure de distribution de chaleur (230) pouvant être reliée à ladite partie de corps et agencée pour une distribution de chaleur depuis l'au moins un module d'éclairage.

6. Structure de support selon la revendication 5, dans laquelle ladite structure de distribution de chaleur est une feuille métallique.

7. Dispositif d'éclairage (200) comprenant :
un tube de lampe (250),
au moins un module d'éclairage (210),
une unité de pilote (220) pour une alimentation de puissance audit au moins un module d'éclairage, et
une structure de support selon la revendication 1 agencée pour supporter ledit au moins un module d'éclairage et pour loger ladite unité de pilote et dans laquelle ladite structure de support est agencée dans ledit tube de lampe.

8. Dispositif d'éclairage selon la revendication 7, dans lequel ledit tube de lampe est un tube de lampe en verre.

9. Procédé (1100) de fabrication d'une structure de support pour l'agencement dans un tube de lampe, comprenant les étapes de :
fourniture (1101) d'un matériau plastique dans un état fluide et injection (1102) dudit matériau plastique dans un moule ;
moulage (1103) dudit matériau plastique en une partie de corps et une partie de couvercle, dans laquelle ladite partie de corps et ladite partie de couvercle est moulée dans une pièce et comprend au moins un moyen de fixation pour la fixation d'au moins un module d'éclairage, et au moins un compartiment agencé pour loger une unité de pilote pour une alimentation de puissance à l'au moins un module d'éclairage,
et au moins un moyen de connexion pour la connexion d'au moins une partie de couvercle audit au moins un compartiment.

10. Procédé selon la revendication 9, comprenant les étapes de :
fourniture d'un matériau de feuille thermoconducteur ;
agencement dudit matériau de feuille thermoconducteur dans un moule ;
fourniture d'un matériau plastique dans un état fluide et injection dudit matériau plastique dans le moule ;
moulage dudit matériau plastique dans ladite partie de corps, dans lequel ledit matériau de feuille est lié audit matériau plastique et dans lequel ledit matériau plastique et ledit matériau de feuille sont reliés thermiquement l'un à l'autre.
